# EUROPÄISCHE PATENTSCHRIFT

(11) **EP 2 438 462 B1**
(45) Veröffentlichungstag und Bekanntmachung des Hinweises auf die Patenterteilung: **12.12.2018**
(21) Anmeldenummer: 10725080.5
(22) Anmeldetag: 07.06.2010
(51) Int. Cl.: G01S 13/78

(54) **VERFAHREN ZUR POSITIONIERUNG UND FAHRZEUG-KOMMUNIKATIONSEINHEIT**
METHOD FOR POSITIONING AND VEHICLE COMMUNICATION UNIT
PROCÉDÉ DE LOCALISATION ET UNITÉ DE COMMUNICATION EMBARQUÉE DANS UN VÉHICULE

(30) Priorität: 05.06.2009 DE 102009026792
(43) Veröffentlichungstag der Anmeldung: 11.04.2012
(73) Patentinhaber: Continental Teves AG & Co. OHG, 60488 Frankfurt am Main (DE)
(72) Erfinder: STÄHLIN, Ulrich, 65670 Eschborn (DE); MENZEL, Marc, 35043 Marburg (DE); ZECHA, Stephan, 63768 Hoesbach (DE); SCHERF, Oliver, 63856 Bessenbach (DE)
(86) Internationale Anmeldenummer: PCT/EP2010/057909
(87) Internationale Veröffentlichungsnummer: WO 2010/139806

(56) Entgegenhaltungen:
- EP-A1- 0 389 325
- US-A1- 2003 142 002
- US-B1- 7 136 016
- US-B1- 7 233 795
- Soeren Hess: "Spectrum amd standardization" ITS Safety 2010 Symposium 23. Februar 2009 (2009-02-23), Seiten 1-25, XP002605460 Gefunden im Internet: URL:http://www.itsforum.gr.jp/Public/J3Sch edule/P22/hess090226.pdf [gefunden am 2010-10-12]

## Beschreibung

Die Erfindung betrifft ein Verfahren zur Positionierung, d.h. zur Ermittlung der Position eines Kommunikationsteilnehmers, in der Fahrzeug-zu-Umgebung-Kommunikation (C2X), welche sowohl die Fahrzeug-zu-Fahrzeug-Kommunikation (C2C) als auch die Fahrzeug-zu-Infrastruktur-Kommunikation (C2I) umfasst, sowie eine zur Durchführung dieses Verfahrens eingerichtete Fahrzeug-Kommunikationseinheit.

Im Rahmen einer kooperativen Sensorkommunikation ist bei dem Verfahren vorgesehen, dass ein erster Sensor eines ersten Kommunikationsteilnehmers mit einer Sende- und Empfangseinheit einen Abfrageimpuls aussendet, welcher durch eine Sende- und Empfangseinheit eines zweiten Sensors eines zweiten Kommunikationsteilnehmers durch einen Antwortimpuls beantwortet wird, wobei der Antwortimpuls durch den ersten Sensor empfangen und ausgewertet und eine Positionierung durchgeführt wird. Diese Positionierung erfolgt also aus einer kooperativen Sensorkommunikation, d.h. mit bei dieser Sensorkommunikation ermittelten Informationen.

Im Rahmen der Fahrzeug-zu-Umgebung-Kommunikation (C2X) wird nach dem gegenwärtigen Stand der Forschung typischerweise ein Netzwerk der an der Kommunikation teilnehmenden Sender- und Empfänger aufgebaut, wobei es für die Einrichtung eines solchen Adhoc-Netzwerkes notwendig ist, die Positionen der Sender- und Empfänger zu kennen. Hierfür wird typischerweise eine Positionierung verwendet, die aus einem satellitenbasierten Ortungssystem, beispielsweise GPS, Galileo oder dergleichen, stammt. Viele Anwendungsfälle bei Sicherheitsanwendungen, beispielsweise eine Kreuzungsassistenz oder eine kooperative Spurwechselassistenz bzw. Spurwechselwarnung benötigen jedoch eine sehr genaue Positionierung des jeweiligen Fahrzeugs, die mit einer satellitenbasierten Ortung und vertretbarem Aufwand häufig nicht erreicht werden kann. Auch die Navigation eines Fahrzeugs ließe sich mit einer genaueren Positionierung verbessern, weil die Fahranweisungen präziser gegeben werden könnten.

Im Rahmen einer kooperativen Sensorik ist es möglich, eine sehr genaue Ortung bzw. Positionierung von Verkehrsteilnehmern zu erreichen. Das Funktionsprinzip der kooperativen Sensorik ist ähnlich einem Sekundärradar, bei dem ausgesendete Radarwellen nicht passiv gestreut, sondern aktiv empfangen und Antwortwellen ausgesendet werden.

Die WO 2009/074655 A1 beschreibt ein System zur Übertragung von fahrzeugrelevanten Daten über mobile Kommunikationseinrichtungen, wozu zwei verschiedene Kommunikationseinheiten mit jeweils einer Antenne sowie ein zusätzliches GPS-Modul vorgesehen sind. Eine der beiden Kommunikationseinheiten ist als WLAN-basierte Kommunikationseinheit ausgebildet, mit der beispielsweise auch eine ITS-G5-Kommunikation im Rahmen einer Adhoc-Netzwerk-Kommunikation ermöglicht würde. Die andere Kommunikationseinheit ist als drahtlose Zugangs- und Fahrberechtigungseinheit (RKE, Remote Keyless Entry) realisiert, wobei sämtliche Kommunikationseinheiten durch einen gemeinsamen zentralen Rechner des Fahrzeugs angesteuert werden. Dies ist aufwendig, weil verschiedene Kommunikationseinheiten und Wege im Fahrzeuge untergebracht werden müssen. Außerdem ist die Kommunikation der drahtlosen Zugangs- und Fahrberechtigungseinheit nicht hinreichend zuverlässig, um in Sicherheitseinrichtungen zu verwendende Daten zu übertragen.

Aus der EP 0 389 325 A1 ist ein auf einem Sekundärradar basierendes Positionierungsverfahren bekannt, bei dem ein Radar-System derart ausgebildet ist, dass auf eine empfangene Radarwelle einer bestimmten Frequenz eine Antwortwelle ausgesendet wird, aus der dann die Position der antwortenden Systemkomponente ermittelt werden kann. Die Trägerwelle kann zur Erhöhung der Richtungsauflösung mit einem Pseudo-Random-Code moduliert sein. Die Arbeitsfrequenz des Systems liegt bei 1 GHz.

Auf dem ITS Safety 2010 Symposium wurde am 23. Februar 2009 ein Vortrag Sören Hess, "Spectrum and Standardization" gehalten, aus dem sich ergab, dass im Rahmen der ITS-Adhoc-Netzwerk Fahrzeug-zu-Umgebung Kommunikation bei 5,9 GHz drei Kanäle zur Verfügung stehen, von denen ein Kanal ein Steuerungskanal (Control Channel) und zwei Kanäle Servicekanäle sind. Der erste Service-Kanal soll für Geocast-Mitteilungen und Multi-Hop-Messages und der zweite Service-Kanal für kurzreichweitige Botschaften mit Road-Side-Units (RSU) verwendet werden. Diese Kommunikation soll auf einem Frequenzband der Breite 10MHz bei 5890 Hertz (im Kanal 178) stattfinden.

Aus der US 2003/0142002 A1 ist ein Radar-Leuchtfeuer-Steuerungssystem für den Luftverkehr bekannt, bei dem Abfrage- und Antwortsignal bei verschiedenen Frequenzen gesendet werden. Dabei wird zur Positionsbestimmung ein Phasenversatz ausgewertet.

Aufgabe der Erfindung ist es daher, eine genauere Positionierung als bei dem Aufbau der Adhoc-Netzwerk-Kommunikation zur Verfügung zu stellen und die dafür erforderlichen Daten mit hoher Zuverlässigkeit im Rahmen einer Fahrzeug-zu-Umgebung-Kommunikation auszutauschen.

Diese Aufgabe wird erfindungsgemäß mit dem Verfahren gemäß Anspruch 1 und der entsprechend eingerichteten Fahrzeug-Kommunikationseinheit gemäß Anspruch 11 gelöst.

Dazu wird erfindungsgemäß vorgeschlagen, dass die Sende- und Empfangseinheiten des ersten und des zweiten Sensors der verschiedenen Kommunikationsteilnehmer ein für fahrzeugbezogene Sicherheitsanwendungen reserviertes Frequenzband verwenden. Auf einem solchen Frequenzband kann eine zuverlässige Kommunikation stattfinden, da dieses Frequenzband für entsprechende Anwendungen reserviert ist. Ferner kommt es zu wenigen Kollisionen mit sonstigen Datenpaketen, da diese auf andere Frequenzbänder ausweichen müssen, sofern sie nicht für die Fahrzeugsicherheit relevante Daten übertragen. Da Sicherheitsanwendungen in dem Fahrzeug zunehmend mit Möglichkeiten für eine Fahrzeug-zu-Umgebung-Kommunikation ausgestattet sind, können sowohl für die Adhoc-Netzwerk-Kommunikation als auch für die kooperative Sensorkommunikation die gleichen Sende- und Empfangseinheiten respektive Antenneneinheiten verwendet werden.

Gemäß einer bevorzugten Ausführungsform kann die C2X-Kommunikation nach dem ITS-G5-Standard (IEEE 802.11p), durchgeführt werden. In diesem Fall kann im Rahmen des IEEE 802.11p-Standards, wie er derzeit nach ETSI vorgesehen ist, der Service-Kanal 2 (SCH2)für die verbesserte Positionierung verwendet werden, der für den Frequenzbereich zwischen 5,885 GHz und 5,895 GHz vorgesehen ist.

Die anderen beiden im Rahmen des IEEE 802.11p-Standards (ETSI) vorgesehenen Kanäle sind bereits im Rahmen der Adhoc-Netzwerk-Kommunikation belegt. Hierbei handelt es sich um einen Kontroll- bzw. Steuerkanal (CCH) und den Servicekanal 1 (SCH1). Da Fahrzeuge zunehmend mit Möglichkeiten zur Adhoc-Netzwerk-Kommunikation ausgestattet werden sollen, kann auf diese Weise besonders günstig eine kooperative Sensorkommunikation mit durchgeführt und erfindungsgemäß zur Verbesserung der Positionierung der Kommunikationsteilnehmer verwendet werden.

Gemäß einer bevorzugten Ausbildung des vorgeschlagenen Verfahrens ist der Abfrageimpuls mit einem PRN-Code (Pseudo Random Noise-Code) des ersten Sensors versehen, welcher sowohl für eine ungestörte Kommunikation als auch zur Identifikation des ersten Sensors eingesetzt werden kann. Der Antwortimpuls des zweiten Sensors wird insbesondere um eine Identifikationsnummer ergänzt, wobei die Entfernung zwischen dem ersten und dem zweiten Sensor dann aus der Laufzeit von Abfrage- und Antwortimpuls ermittelt wird. Hierdurch lässt sich die Entfernung sehr genau bestimmen.

Um auch die Winkellage zwischen dem ersten und dem zweiten Sensor zu ermitteln, wird ergänzend vorgeschlagen, den Phasenversatz des durch den zweiten Sensor ausgesandten Antwortimpulses zwischen einzelnen Antennenabschnitten, sog. "Patches" bzw. Einzugsbereichen der Antenne, eines Mehrantennenfeldes bzw. einer Mehrfeldantenne der Sende- und Empfangseinheit des ersten, d.h. des den Antwortpuls empfangenden Sensors zu messen und daraus die Winkellage zwischen dem ersten und dem zweiten Sensor zu ermitteln.

Durch diese kooperative Sensorik kann implementierungsabhängig eine relative Positionierung mit einer Genauigkeit von beispielsweise 1 cm bei einer Updaterate von 100 Hz für unverdeckte Objekte in der Umgebung erreicht werden.

Um einer ausreichend großen Anzahl von Verkehrsteilnehmern das Ermitteln der Relativposition zueinander zu ermöglichen, kann erfindungsgemäß vorgeschlagen werden, den Sende- und Empfangseinheiten der ersten und zweiten, d.h. an der Kommunikation teilnehmenden kooperativen Sensoren, über ein Zuordnungsverfahren einen Kommunikations-Zeitschlitz zuzuweisen. Innerhalb dieses Zeitschlitzes kann dann eine störungsfreie Kommunikation durchgeführt werden.

In Weiterbildung des erfindungsgemäßen Verfahrens kann die aus dem Abfrageimpuls des ersten Sensors und dem Antwortimpuls des zweiten Sensors aus einer kooperativen Sensorkommunikation abgeleitete Positionierung mit einer Positionierung aus einer Adhoc-Netzwerk-Kommunikation assoziiert werden, wobei unter Assoziierung insbesondere ein Vergleichen der unterschiedlichen Positionierungen, d.h. der verschiedenen ermittelten Positionen, und ein Bestimmen einer verbesserten Positionierung verstanden wird.

Um die Assoziierung zu vereinfachen, kann erfindungsgemäß vorgeschlagen werden, den Teilnehmern an der kooperativen Sensorkommunikation und der Adhoc-Netzwerk-Kommunikation dieselbe Identifikationskennung zuzuweisen.

Die Assoziierung der Daten aus der kooperativen Sensorkommunikation und der Adhoc-Netzwerk-Kommunikation kann erfindungsgemäß bereits während der Abarbeitung des Adhoc-Netzwerk-Protokollstapels erfolgen, da beide Kommunikationsarten ein technisch vergleichbares Kommunikationsband verwenden. Hierdurch wird die Positionierung, gegebenenfalls aber auch die Übertragung und Auswertung weitere Informationen, wie bspw. anderer sicherheitsrelevanter Daten, erheblich beschleunigt.

Dazu kann erfindungsgemäß vorgesehen sein, dass mit dem Abfrage- und dem Antwortimpuls weitere Informationen mit übertragen werden, die sich aufgrund der hohen Updaterate in der kooperativen Sensorkommunikation schnell verteilen. Diese zusätzlichen Informationen können insbesondere sicherheitsrelevante Daten wie statische Typenkennungen (Fußgänger, Radfahrer, Pkw, Lkw) oder dergleichen sein. Neben statischen Daten kommen auch dynamische Daten wie Geschwindigkeit, Beschleunigung, Lenkradwinkel, Gierrate, Bremspedalstellung, Blinker für Pfadprädiktion usw., in Frage. Zu den dynamischen Daten können auch Daten gehören, die das Systemverhalten oder das Fahrverhalten charakterisieren, die also aufzeigen, wie sich Objekte verhalten werden. So könnten autonom agierende Systeme, wie beispielsweise Notbremsassistenten, Daten versenden, die jeweils zukünftig geplante Aktionen beschreiben. Durch diese Vorhersage lassen sich anschließend bessere Reaktionen auch bei den umgebenden Objekten (Kommunikationsteilnehmern) erzielen. Auf diese Weise können auch autonome Aktionen besser abgestimmt werden.

Daher bietet es sich generell an, sicherheitskritische Anwendungen und die dafür benötigen Daten sowohl über das kooperative Sensorsystem und die Fahrzeug-zu-Umgebung-Kommunikation abzudecken. Kommunikationslastige Mobilitätsanwendungen bzw. Voranalysen einer Situation kann dann über die reine Fahrzeug-zu-Umgebung-Kommunikation abgewickelt werden.

Um insbesondere den Kommunikationskanal für die kooperative Sensorkommunikation effektiv zu nutzen, kann erfindungsgemäß vorgesehen werden, dass dynamische und/oder statische Daten zyklisch übertragen werden, wobei dynamische Daten bei einer Änderung auch sofort übertragen werden können. Für die sofortige Übertragung kann der Sendezyklus der anderen Daten unterbrochen werden. Daher ist es auch möglich, sich typischerweise schnell bzw. häufig ändernde dynamische Daten nicht in den üblichen Sendezyklus aufzunehmen. Dieser kann insbesondere statische Daten wie Masse, Abmaße, Objekttyp, bei Schildern Schildtyp, bei Ampeln aktuelle und zukünftige Ampelphase usw. enthalten.

Ferner betrifft die Erfindung eine Fahrzeug-Kommunikationseinheit mit einer Sende- und Empfangseinheit, gegebenenfalls einschließlich einer Antenneneinheit, einem insbesondere an einer kooperativen Sensorkommunikation teilnehmenden Sensor und einer Recheneinheit gemäß den Merkmalen des Anspruchs 11. Die Fahrzeug-Kommunikationseinheit ist zur Teilnahme an einer Adhoc-Netzwerk-Kommunikation nach dem ITS-G5-Standard, insbesondere also basierend auf IEEE 802.11p in dem Frequenzband zwischen 5,875 GHz und 5,905 GHz eingerichtet. Ferner ist die Recheneinheit der Fahrzeug-Kommunikationseinheit zur Durchführung des vorbeschriebenen Verfahrens oder Teilen davon eingerichtet.

Entsprechend bezieht sich die Erfindung auch auf ein Computerprogrammprodukt, welches Programmmittel dazu aufweist, das erfindungsgemäß vorgeschlagene Verfahren auf der Recheneinheit einer Fahrzeug-Kommunikationseinheit einzurichten.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: eine Kanalzuordnung bei der Fahrzeug-zu-Umgebung-Kommunikation gemäß IEEE802.11P;
- Fig. 2: schematisch eine erfindungsgemäße Fahrzeug-Kommunikationseinheit und
- Fig. 3: ein schematisches Ablaufdiagramm des erfindungsgemäß vorgeschlagenen Verfahrens.

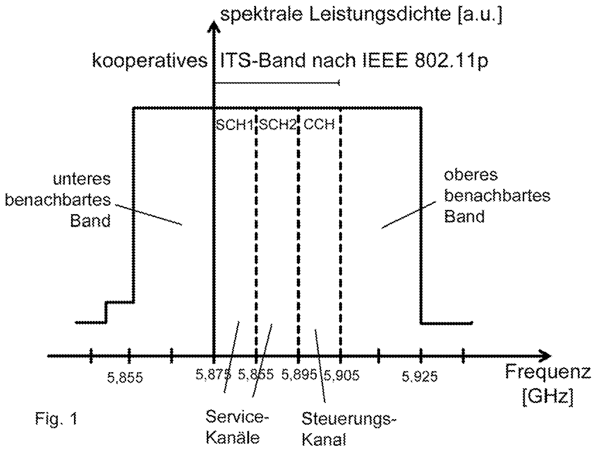

In Fig. 1 ist die Kanalzuordnung bei der Fahrzeug-zu-Umgebung-Kommunikation im Rahmen des ITS-Standards nach ET-SI für IEEE 802.11p als spektrale Leistungsdichte in beliebigen Einheiten in Abhängigkeit von der Frequenz in der Einheit GHz dargestellt. Das kooperative ITS-Band liegt bei etwa 5,9 GHz und weist zwei Servicekanäle SCH1 und SCH2 sowie einen Steuerungskanal CCH auf. Diese Aufteilung ist nach dem ETSI-Standard derzeit angedacht. Dieses kooperative ITS-Frequenzband mit einer Breite von 30 MHz wurde in Europa exklusiv für fahrzeugbezogene Sicherheitsanwendungen freigegeben und ist nach der aktuellen Planung in drei Kanäle zu jeweils 10 MHz aufgeteilt, wobei in der Fahrzeug-zu-Umgebung-Kommunikation von einem dualen Empfängerkonzept (dual receiver) ausgegangen wird, nach dem immer zwei Kanäle abgehört werden. Dieses sind der Steuerungs- bzw. Kontrollkanal CCH und einer der Servicekanäle, nach aktueller Diskussionslage bevorzugt der erste Servicekanal SCH1, also der obere und der untere der drei Kanäle des kooperativen ITS-Bandes. Die Frequenzfreigabe in den USA ist ähnlich, jedoch sind dort aktuell 70 MHz freigegeben.

Der zweite Servicekanal SCH2 in dem Frequenzbereich von 5,885 GHz bis 5,895 GHz ist praktisch ohne Verwendung, da nur 2 Empfänger zur Verfügung stehen. Das kooperative ITS-Band ist ferner von einem oberen benachbarten Band und einem unteren benachbarten Band in der Breite von jeweils 20 MHz umgeben.

Erfindungsgemäß soll der zweite Servicekanal SCH2 für die Kommunikationen der kooperativen Sensorik verwendet werden, insbesondere um die Positionierung der Fahrzeuge bzw. Kommunikationsteilnehmer in der Fahrzeug-zu-Fahrzeug-Kommunikation, oder allgemeiner der Fahrzeug-zu-Umgebung-Kommunikation, zu verbessern.

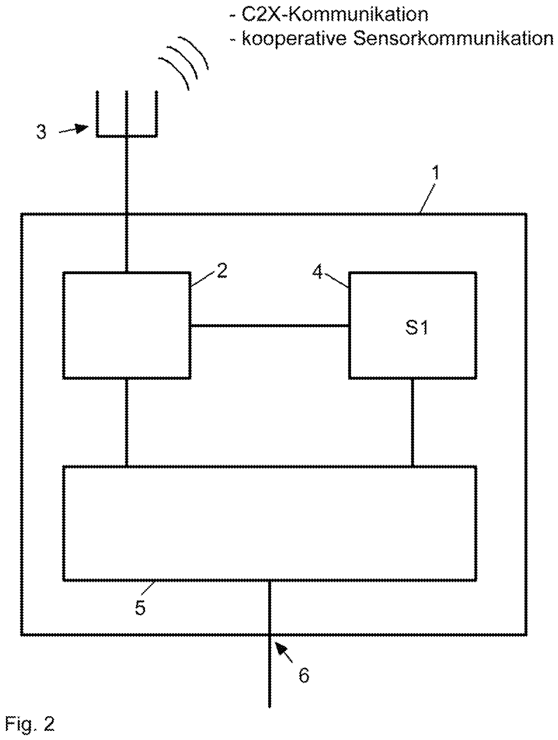

Hierzu wird die in Fig. 2 dargestellte Fahrzeug-Kommunikationseinheit 1 vorgeschlagen, welche eine Sende- und Empfangseinheit 2 mit einer integrierten Antenneneinheit aufweist. Zu der integrierten Antenneneinheit gehört auch eine Mehrfeldantenne 3, die zur Kommunikation im Bereich von 5,9 GHz eingerichtet ist und sowohl die Fahrzeug-zu-Fahrzeug-Kommunikation als auch die kooperative Sensorkommunikation der Fahrzeug-Kommunikationseinheit 1 übernimmt. Dabei kann die Fahrzeug-Kommunikationseinheit als logische Einheit auf verschiedene Fahrzeugeinheiten verteilt sein und muss nicht notwendigerweise in einem gemeinsamen Gehäuse untergebracht sein.

Ferner weist die Fahrzeug-Kommunikationseinheit 1 einen an einer kooperativen Sensorkommunikation teilnehmenden Sensor 4 sowie eine Recheneinheit 5 auf. Die Fahrzeug-Kommunikationseinheit 1 ist zur Teilnahme an einer Adhoc-Netzwerk-Kommunikation nach dem ITS-G5-Standard, insbesondere also basierend auf dem IEEE 802.11p-Standard in dem Frequenzband zwischen 5,875 GHz und 5,905 GHz eingerichtet.

Die Recheneinheit 5 ist ferner zur Durchführung des nachfolgend genauer beschriebenen Verfahrens zur Positionierung in der Fahrzeug-zu-Umgebung-Kommunikation eingerichtet und kann über einen Fahrzeuganschluss 6 zu einem Fahrzeug-Kommunikationsnetz, insbesondere einen Bus-System, mit anderen Fahrzeugeinheiten des Fahrzeugs verbunden sein. Hierzu zählen insbesondere Sicherheitseinheiten mit Fahrerassistenzsystemen.

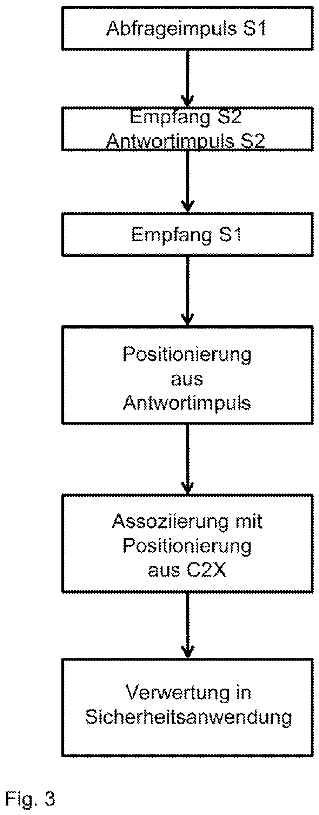

Das Verfahren wird nachfolgend unter Bezug auf Fig. 3 näher erläutert.

Der kooperative Sensor 4, nachfolgend auch S1 für das ersten Fahrzeug genannt, sendet nach dem Prinzip eines Sekundärradarverfahrens über die Sende- und Empfangseinheit 2 und die Mehrfeldantenne 3 einen mit einem PRN-Code (Pseudo Random Noise-Code) versehenen Abfrageimpuls aus. Dieser Abfrageimpuls wird von einem zweiten kooperativen Sensor 4 eines anderen Teilnehmers empfangen, der beispielsweise in einer ähnlichen Fahrzeug-Kommunikationseinheit 1 eines anderen Fahrzeugs integriert sein kann. Dieser zweite kooperative Sensor wird nachfolgend auch als S2 bezeichnet.

Bei der Verarbeitung dieses Abfrageimpulses wird der Abfrageimpuls zumindest mit einer Identifikationsnummer des zweiten kooperativen Sensors S2 versehen und als Antwortimpuls an den ersten kooperativen Sensor S1 zurückgesendet. Dazu wird der Antwortimpuls über die Mehrfeldantenne 3 und die Sende- und Empfangseinheit 2 empfangen und durch den kooperativen Sensor S1 dekorreliert, d.h. der PRN-Code in Dateninformationen übersetzt.

Aus dem Zeitpunkt des Absendens des Abfrageimpulses und dem Empfang des Antwortimpulses können aufgrund des Vorwissens über die Verarbeitungszeit des Anfrageimpulses in dem zweiten kooperativen Sensor S2 bzw. dessen Sende- und Empfangseinheit die Laufzeit des Pulses ermittelt und daraus die Entfernung zwischen dem ersten kooperativen Sensor S1 und dem zweiten kooperativen Sensor S2 bestimmt werden.

Über ein zweites Messverfahren wird die Winkellage zwischen den beiden kooperativen Sensoren S1 und S2 ermittelt. Dazu wird der Phasenversatz der zurückgesendeten Welle zwischen den einzelnen Einzugsgebieten bzw. Patches der Mehrfeldantenne 3 der empfangenden Sende- und Empfangseinheit 2 des kooperativen Sensors 4 (S1) über ein nummerisches Verfahren berechnet.

Hierdurch wird die genaue Positionierung aus dem empfangenen Antwortimpuls abgeleitet. Dies kann in der Recheneinheit 5 geschehen.

Zusammengefasst wird also ein Abfrageimpuls durch den ersten kooperativen Sensor S1 ausgesendet und von dem zweiten kooperativen Sensor empfangen, der daraufhin ein um eine Identifikationsnummer ergänzten Antwortimpuls S2 aussendet. Dieser wird durch den ersten kooperativen Sensor S1 empfangen, wobei anschließend aus dem Antwortimpuls die Positionierung des zweiten kooperativen Sensors relativ zu dem ersten kooperativen Sensor durchgeführt wird.

Vorzugsweise findet eine Assoziierung dieser aus der kooperativen Sensorkommunikation nach dem Sekundärradarprinzip abgeleiteten Position mit einer im Rahmen der üblichen C2X-Kommunikation nach dem ITS-Standard ermittelten Position statt, die bei der Abarbeitung des Adhoc-Netzwerk-Kommunikationsstapels nach dem ITS-Standard für den Aufbau des Adhoc-Funkkommunikationsnetzes benötigt wird. Diese Assoziierung bedeutet insbesondere einen Vergleich und eine Verbesserung der Positionierung.

Auch dies kann erfindungsgemäß in der Recheneinheit 5 durchgeführt werden, welche die verbesserte Positionierung dann über den Anschluss 6 an nachgeschaltete Sicherheitsanwendungen, beispielsweise einen Kreuzungs- und Abbiegeassistenten einer Sicherheitsfahrzeugeinheit, ausgibt. Für die Assoziierung ist es sinnvoll, wenn die Identifikationsnummern der verschiedenen Teilnehmer in der Fahrzeug-zu-Umgebung-Kommunikation nach dem ITS-Standard und in der kooperativen Sensorkommunikation dieselben sind.

Durch die Verwendung des geschützten Frequenzbereichs in dem zweiten Servicekanal SCH2 bei knapp 5,9 GHz kann die Störsicherheit der kooperativen Sensorkommunikationen bzw. Sensorik verbessert werden. Durch die Verknüpfung mit der Fahrzeug-zu-Umgebung-Kommunikation nach dem ITS-Standard entsteht ein System mit sehr guter Ortung und der Möglichkeit des Datenaustauschs auch größerer Dateien, wie sie zum Beispiel für Mobilitätsanwendungen notwendig sind. Diese werden bevorzugt dann über die übliche C2X-Kommunikation übertragen.

Ein konkreter Anwendungsfall wird nachfolgend beschrieben. Bei einem Linksabbiegerassistenten wird gewarnt, falls das eigene Fahrzeug links abbiegen will und dabei den Fahrweg eines entgegenkommenden Fahrzeugs durchquert, so dass es mit diesem kollidieren wird. Hierzu ist eine sehr genaue Positionierung beider Fahrzeuge notwendig. Durch die Fahrzeug-zu-Umgebung-Kommunikation nach dem ITS-Standard werden Daten zwischen den einzelnen Fahrzeugen in der Umgebung auf dem Kontroll- bzw. Steuerungskanal CCH ausgetauscht, welche auch die Positionierung aus der Satelliten-Ortung, beispielsweise die GPS-Position, enthalten.

Zusätzlich finden erfindungsgemäß eine Positionierung und ein weiter Datenaustausch im Rahmen der kooperativen Sensorik statt. Dabei werden die Daten zwischen der C2X-Kommunikation und der kooperativen Sensorkommunikation validiert. Die hieraus abgeleitete, verbesserte Positionierung sorgt dafür, dass eine spurgenaue Ortung der Fahrzeuge stattfinden kann und dass keine weitere Sensorik für das Ausführen der Linksabbiegerassistenz notwendig ist, um eine relevante Warnung ausgeben zu können.

Derzeit werden die Positionsinformationen aus der Satellitenortung beispielsweise mittels Radar, Lidar oder Kameras überprüft und bestätigt. Dies könnte mit dem erfindungsgemäßen Verfahren vermieden werden.

### Bezugszeichenliste:

- 1: Fahrzeug-Kommunikationseinheit
- 2: Sende- und Empfangseinheit
- 3: Mehrfeldantenne
- 4: kooperativer Sensor S1 bzw. S2
- 5: Recheneinheit
- 6: Anschluss

- S1: erster kooperativer Sensor
- S2: zweiter kooperativer Sensor

## Patentansprüche

1. Verfahren zur Positionsbestimmung mittels Fahrzeug-zu-Umgebung-Kommunikation im kooperativen ITS-Band, wobei eine Sende- und Empfangseinheit (2) mit zwei Empfängern einer ersten Fahrzeug-Kommunikationseinheit (1) eines ersten Fahrzeugs mit einer entsprechenden Sende- und Empfangseinheit (2) einer zweiten Fahrzeug-Kommunikationseinheit (1) eines zweiten Kommunikationsteilnehmers in einem für fahrzeugbezogene Sicherheitsanwendungen reservierten, in mehrere Kanäle unterteilten Frequenzband kommuniziert, wobei einer der Empfänger einen Steuerungskanal (CCH)für eine Adhoc-Netzwerkkommunikation der Fahrzeug-zu-Umgebung-Kommunikation selektiert, und wobei der andere Empfänger einen ersten von zwei Servicekanälen (SCH1, SCH2) selektiert,
**dadurch gekennzeichnet, dass** für die Positionsbestimmung ein zweiter der zwei Servicekanäle (SCH1, SCH2) für eine kooperative Sensorkommunikation selektiert wird, wobei ein erster Sensor (S1) der ersten Fahrzeug-Kommunikationseinheit über die Sende- und Empfangseinheit (2) des ersten Fahrzeugs auf dem zweiten Kanal einen PRN-Code enthaltenden Abfrageimpuls aussendet, der von einem zweiten Sensor (S2) der zweiten Fahrzeug-Kommunikationseinheit über die Sende- und Empfangseinheit des zweiten Kommunikationsteilnehmers empfangen und mit einem Antwortimpuls auf demselben Kanal beantwortet wird, der den um eine Identifikationsnummer ergänzten PRN-Code enthält.

2. Verfahren nach Anspruch 1, **dadurch gekennzeichnet, dass** als zweiter Servicekanal für die Positionsbestimmung im Rahmen des IEEE 802.11p Standard der Service-Kanal 2 (SCH2) verwendet wird.

3. Verfahren nach einem der vorhergehenden Ansprüche, **dadurch gekennzeichnet, dass** der Phasenversatz des Antwortimpulses des zweiten Sensors(4; S2) zwischen einzelnen Antennenabschnitten einer Mehrfeldantenne (3) der Sende- und Empfangseinheit (2) des ersten Sensors (4, S1) zur Ermittlung der Winkellage zwischen dem ersten und dem zweiten Sensor (4; S1, S2) ermittelt wird.

4. Verfahren nach einem der vorhergehenden Ansprüche, **dadurch gekennzeichnet, dass** den Sende- und Empfangseinheiten (2) der Sensoren (4; S1, S2) über ein Zuordnungsverfahren ein Kommunikations-Zeitschlitz zugewiesen wird.

5. Verfahren nach einem der vorhergehenden Ansprüche, **dadurch gekennzeichnet, dass** die aus dem Abfrageimpuls des ersten Sensors (4; S1) und dem Antwortimpuls des zweiten Sensors (4; S2) als aus einer kooperativen Sensorkommunikation abgeleitete Positionierung mit einer Positionierung aus einer Ad-hoc-Netzwerk-Kommunikation assoziiert wird.

6. Verfahren nach Anspruch 5, **dadurch gekennzeichnet, dass** die Teilnehmer an der kooperativen Sensorkommunikation und der Ad-hoc-Netzwerk-Kommunikation dieselbe Identifikationskennung verwenden.

7. Verfahren nach Anspruch 5 oder 6, **dadurch gekennzeichnet, dass** die Assoziierung der Daten aus der kooperativen Sensorkommunikation und der Ad-hoc-Netzwerk-Kommunikation während der Abarbeitung des Ad-hoc-Netzwerk-Protokollstapels erfolgt.

8. Verfahren nach einem der vorhergehenden Ansprüche, **dadurch gekennzeichnet, dass** mit dem Abfrage- und dem Antwortimpuls weitere Informationen mit übertragen werden.

9. Verfahren nach Anspruch 8, **dadurch gekennzeichnet, dass** als weitere Informationen dynamische und/oder statische Daten zyklisch übertragen werden, wobei dynamische Daten bei einer Änderung sofort übertragen werden.

10. Fahrzeug-Kommunikationseinheit mit einer Sende- und Empfangseinheit (2), einem Sensor (4) und einer Recheneinheit (5), wobei die Fahrzeug-Kommunikationseinheit (2) zur Teilnahme an einer Adhoc-Netzwerk-Kommunikation nach dem ITS-G5-Standard eingerichtet ist, **dadurch gekennzeichnet, dass** die Recheneinheit (5) zur Durchführung des Verfahrens nach einem der Ansprüche 1 bis 9 eingerichtet ist.

## Claims

1. Method for position determination by means of vehicle-to-surroundings communication in the cooperative ITS band, wherein a transmission and reception unit (2), having two receivers, of a first vehicle communication unit (1) of a first vehicle communicates with a corresponding transmission and reception unit (2) of a second vehicle communication unit (1) of a second communication subscriber in a frequency band that is reserved for vehicle-oriented safety applications and is divided into multiple channels, wherein one of the receivers selects a control channel (CCH) for an ad-hoc network communication of the vehicle-to-surroundings communication, and wherein the other receiver selects a first of two service channels (SCH1, SCH2),
**characterized in that** for the position determination a second of the two service channels (SCH1, SCH2) is selected for a cooperative sensor communication, wherein a first sensor (S1) of the first vehicle communication unit uses the transmission and reception unit (2) of the first vehicle to emit a challenge pulse, containing a PRN code, on the second channel, which challenge pulse is received by a second sensor (S2) of the second vehicle communication unit via the transmission and reception unit of the second communication subscriber and is responded to with a response pulse on the same channel, said response pulse containing the PRN code complemented by an identification number.

2. Method according to Claim 1, **characterized in that** the IEEE 802.11p standard involves the use of service channel 2 (SCH2) as the second service channel for the position determination.

3. Method according to one of the preceding claims, **characterized in that** the phase offset of the response pulse from the second sensor (4; S2) between individual antenna sections of a multifield antenna (3) on the transmission and reception unit (2) of the first sensor (4, S1) is ascertained in order to ascertain the angle between the first and second sensors (4; S1, S2).

4. Method according to one of the preceding claims, **characterized in that** the transmission and reception units (2) of the sensors (4; S1, S2) are assigned a communication timeslot by means of an allocation method.

5. Method according to one of the preceding claims, **characterized in that** the positioning derived from the challenge pulse from the first sensor (4; S1) and the response pulse from the second sensor (4; S2) as from cooperative sensor communication is associated with positioning from ad-hoc network communication.

6. Method according to Claim 5, **characterized in that** the participants in the cooperative sensor communication and the ad-hoc network communication use the same identification identifier.

7. Method according to Claim 5 or 6, **characterized in that** the data from the cooperative sensor communication and the ad-hoc network communication are associated during the execution of the ad-hoc network protocol stack.

8. Method according to one of the preceding claims, **characterized in that** further information is also transmitted with the challenge and response pulses.

9. Method according to Claim 8, **characterized in that** dynamic and/or static data are transmitted cyclically as further information, with dynamic data being transmitted immediately in the event of a change.

10. Vehicle communication unit having a transmission and reception unit (2), a sensor (4) and a computation unit (5), wherein the vehicle communication unit (2) is set up to participate in ad-hoc network communication based on the ITS-G5 standard, **characterized in that** the computation unit (5) is set up to carry out the method according to one of Claims 1 to 9.

## Revendications

1. Procédé de détermination de position au moyen de la communication de véhicule à infrastructure dans une bande STI coopérative, une unité d'émission et de réception (2) dotée de deux récepteurs d'une première unité de communication de véhicule (1) d'un premier véhicule communiquant avec une unité d'émission et de réception (2) correspondante d'une deuxième unité de communication de véhicule (1) d'un deuxième participant à la communication dans une bande de fréquence réservée aux applications de sécurité en rapport avec les véhicules, subdivisée en plusieurs canaux, l'un des récepteurs sélectionnant un canal de commande (CCH) pour une communication en réseau ad hoc de la communication de véhicule à infrastructure, et l'autre récepteur sélectionnant un premier parmi deux canaux de service (SCH1, SCH2),
**caractérisé en ce que** pour la détermination de position, un deuxième des deux canaux de service (SCH1, SCH2) est sélectionné pour une communication de capteur coopérative, un premier capteur (S1) de la première unité de communication de véhicule envoyant, par le biais de l'unité d'émission et de réception (2) du premier véhicule sur le deuxième canal, une impulsion d'interrogation contenant un code PRN, laquelle est reçue par un deuxième capteur (S2) de la deuxième unité de communication de véhicule par le biais de l'unité d'émission et de réception du deuxième participant à la communication et à laquelle est effectuée une réponse avec une impulsion de réponse sur le même canal, laquelle contient le code PRN complété par un numéro d'identification.

2. Procédé selon la revendication 1, **caractérisé en ce que** le canal de service 2 (SCH2) est utilisé dans le cadre de la norme IEEE 802.11p comme deuxième canal de service pour la détermination de position.

3. Procédé selon l'une des revendications précédentes, **caractérisé en ce que** le déphasage de l'impulsion de réponse du deuxième capteur (4 ; S2) entre les portions d'antenne individuelles d'une antenne à champs multiples (3) de l'unité d'émission et de réception (2) du premier capteur (4, S1) est déterminé en vue de déterminer la position angulaire entre le premier et le deuxième capteur (4 ; S1, S2).

4. Procédé selon l'une des revendications précédentes, **caractérisé en ce que** les unités d'émission et de réception (2) des capteurs (4 ; S1, S2) sont attribuées à un créneau temporel de communication par le biais d'un procédé d'attribution.

5. Procédé selon l'une des revendications précédentes, **caractérisé en ce que** le positionnement dérivé de l'impulsion d'interrogation du premier capteur (4 ; S1) et de l'impulsion de réponse du deuxième capteur (4 ; S2) sous la forme d'une communication de capteur coopérative est associé à un positionnement résultant d'une communication de réseau ad hoc.

6. Procédé selon la revendication 5, **caractérisé en ce que** les participants à la communication de capteur coopérative et à la communication de réseau ad hoc emploient le même identifiant d'identification.

7. Procédé selon la revendication 5 ou 6, **caractérisé en ce que** l'association des données issues de la communication de capteur coopérative et de la communication de réseau ad hoc s'effectue pendant le traitement de la pile de protocole de réseau ad hoc.

8. Procédé selon l'une des revendications précédentes, **caractérisé en ce que** des informations supplémentaires sont transmises conjointement avec l'impulsion d'interrogation et de réponse.

9. Procédé selon la revendication 9, **caractérisé en ce que** les informations supplémentaires sont des données dynamiques et/ou statiques transmises cycliquement, les données dynamiques étant transmises immédiatement lors d'une modification.

10. Unité de communication de véhicule comprenant une unité d'émission et de réception (2), un capteur (4) et une unité de calcul (5), l'unité de communication de véhicule (2) étant conçue pour participer à une communication en réseau ad hoc selon la norme ITS-G5, **caractérisée en ce que** l'unité de calcul (5) est conçue pour mettre en oeuvre le procédé selon l'une des revendications 1 à 9.
